(19) **Europäisches Patentamt**
**European Patent Office**
**Office européen des brevets**

(11) **EP 4 148 455 A1**

(12) **EUROPÄISCHE PATENTANMELDUNG**

(43) Veröffentlichungstag:
**15.03.2023 Patentblatt 2023/11**

(21) Anmeldenummer: **22192769.2**

(22) Anmeldetag: **30.08.2022**

(51) Internationale Patentklassifikation (IPC):
**G01S 7/40** $^{(2006.01)}$     **G01S 13/931** $^{(2020.01)}$

(52) Gemeinsame Patentklassifikation (CPC):
**G01S 7/40; G01S 7/4095;** G01S 7/4086;
G01S 13/931

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **09.09.2021 US 202117469921**

(71) Anmelder: **dSPACE GmbH**
**33102 Paderborn (DE)**

(72) Erfinder:
• **Paul, Jeffrey**
**CA 90501 Torrance (US)**
• **Watkins, Jonathan**
**CA 90042 Los Angeles (US)**
• **Fisch, Tim**
**33178 Borchen (DE)**

(54) **PRÜFVORRICHTUNG ZUM TEST EINES MIT ELEKTROMAGNETISCHEN WELLEN ARBEITENDEN ABSTANDSSENSORS**

(57) Dargestellt und beschrieben ist eine Prüfvorrichtung (1) zum Test eines mit elektromagnetischen Wellen arbeitenden Abstandssensors (2), mit einem Empfangselement (3) zum Empfangen einer elektromagnetischen Freiraumwelle als Empfangssignal ($S_{RX}$), mit einem Abstrahlelement (4) zur Abstrahlung eines elektromagnetischen Ausgangssignals ($S_{TX}$), wobei im Simulationsbetrieb das Empfangssignal ($S_{RX}$) oder ein von dem Empfangssignal ($S_{RX}$) abgeleitetes Empfangssignal ($S'_{RX}$) mittels eines Analog/Digital-Wandlers in ein abgetastetes Signal ($S_{sample}$) gewandelt wird, das abgetastete Signal ($S_{sample}$) mit einer Signalverarbeitungseinheit (5) unter Verwendung einer vorgebbaren Zeitverzögerung ($t_{delay, soll}$) zu einem zeitverzögerten abgetasteten Signal ($S_{sample,sim}$) zeitverzögert (11) wird, das zeitverzögerte abgetastete Signal ($S_{sample,sim}$) mittels eines Digital/Analog-Wandlers zu einem simulierten Reflexionssignal ($S_{sim}$) gewandelt wird, wobei das simulierte Reflexionssignal ($S_{sim}$) oder ein von dem simulierten Reflexionssignal ($S_{sim}$) abgeleitetes simuliertes Reflexionssignal ($S'_{sim}$) als Ausgangssignal ($S_{TX}$) über das Abstrahlelement (4) abgestrahlt wird.

Es ist auf einfache Weise möglich, simulierte Reflexionssignale mit einer Doppler-Signatur zu erzeugen, indem die Signalverarbeitungseinheit (5) auf das abgetastete Signal ($S_{sample}$) oder auf das zeitverzögerte abgetastete Signal ($S_{sample,sim}$) eine vorgebbare Doppler-Signatur ($S_{doppler}$) als charakteristisches Bewegungsprofil eines zu simulierenden Reflexionsobjekts aufmoduliert (12), und indem das zeitverzögerte abgetastete und zusätzlich mit der Doppler-Signatur ($S_{doppler}$) versehene Signal ($S_{sample,sim}$) mittels des Digital/Analog-Wandlers zu dem simulierten Reflexionssignal ($S_{sim}$) gewandelt wird.

Fig. 2

## Beschreibung

Die Erfindung betrifft eine Prüfvorrichtung zum Test eines mit elektromagnetischen Wellen arbeitenden Abstandssensors, mit einem Empfangselement zum Empfangen einer elektromagnetischen Freiraumwelle als Empfangssignal, mit einem Abstrahlelement zur Abstrahlung eines elektromagnetischen Ausgangssignals, wobei im Simulationsbetrieb das Empfangssignal oder ein von dem Empfangssignal abgeleitetes Empfangssignal mittels eines Analog/Digital-Wandlers in ein abgetastetes Signal gewandelt wird, das abgetastete Signal mit einer Signalverarbeitungseinheit unter Verwendung einer vorgebbaren Zeitverzögerung zu einem zeitverzögerten abgetasteten Signal zeitverzögert wird, das zeitverzögerte abgetastete Signal mittels eines Digital/Analog-Wandlers zu einem simulierten Reflexionssignal gewandelt wird, wobei das simulierte Reflexionssignal oder ein von dem simulierten Reflexionssignal abgeleitetes simuliertes Reflexionssignal als Ausgangssignal über das Abstrahlelement abgestrahlt wird. Darüber hinaus betrifft die Erfindung auch ein Verfahren, das von der Signalverarbeitungseinheit der zuvor beschriebenen Prüfvorrichtung zum Test eines mit elektromagnetischen Wellen arbeitenden Abstandssensors ausgeführt wird und ein Computerprogramm mit Anweisungen, die, wenn sie mit der Signalverarbeitungseinheit der beschriebenen Prüfvorrichtung zum Test eines mit elektromagnetischen Wellen arbeitenden Abstandssensors ausgeführt werden, die Signalverarbeitungseinheit veranlassen, das vorgenannte Verfahren auszuführen.

Prüfvorrichtungen der vorgenannten Art zum Test von Abstandssensoren und Verfahren zum Betreiben derartiger Prüfvorrichtungen sind aus verschiedenen technischen Bereichen und Anwendungsfeldern bekannt, beispielsweise aus dem Bereich der Steuergeräteentwicklung und des Steuergerätetests, insbesondere im automotiven Bereich, hierzu wird beispielsweise verwiesen auf die WO 2020/165191 A1. Ein anderes Anwendungsfeld sind End-of-Line-Prüfstände, also Einrichtungen, die am Ende einer Fertigungslinie der Produktüberprüfung dienen, hier der Überprüfung von Abstandssensoren. Im vorliegenden Fall geht es um den Test von Abstandssensoren, die mit elektromagnetischen Wellen arbeiten. Im automotiven Bereich werden ganz überwiegend Radarsensoren eingesetzt. Grundsätzlich können aber auch Abstandssensoren getestet werden, die in einem anderen Frequenzbereich elektromagnetischer Wellen arbeiten, beispielsweise im Bereich des sichtbaren Lichts, oder die mit elektromagnetischen Strahlungsquellen arbeiten, die elektromagnetische Wellen mit einer langen Kohärenzlänge emittieren, wie beispielsweise bei Laseranwendungen (zum Beispiel Lidar).

Mit den eingangs beschriebenen Prüfvorrichtungen ist es möglich, dem zu testenden Abstandssensor ein Reflexionsobjekt in praktisch beliebiger Entfernung vorzutäuschen. Abstandssensoren der hier betrachteten Art arbeiten grundsätzlich so, dass von ihnen emittierte elektromagnetische Wellen von einem Reflexionsobjekt im Abstrahlbereich des Abstandssensors reflektiert werden, der Abstandssensor empfängt die reflektierten elektromagnetischen Wellen und bestimmt aus der Laufzeit der elektromagnetischen Wellen den Abstand zu dem Objekt. Die Ermittlung der Signallaufzeit kann direkt erfolgen (time-of-flight-Messung), häufig erfolgt sie aber indirekt über geschickte Signalauswertungen. Während im ersten Fall häufig mit sehr kurzen Sensorsignalen gearbeitet wird, also mit Impulsen, werden im letzteren Fall meist zeitlich erkennbar ausgedehnte Sendesignale verwendet und aus der Frequenz des Mischsignals aus ausgesendetem Signal und empfangenem Reflexionssignal die gewünschte Abstandsinformation gewonnen. Als Beispiel für zeitlich ausgedehnte Sendesignale wären hier frequenzmodulierte Dauerstrichsignale zu nennen.

Die Prüfvorrichtung wird zum Test des Abstandssensors in dessen Abstrahlbereich positioniert, die Prüfvorrichtung empfängt die von dem Abstandssensor emittierten Freiraumwellen und verzögert dieses Empfangssignal mit ihrer Signalverarbeitungseinheit gemäß einer vorgegebenen Zeitverzögerung und strahlt dann das zeitverzögerte Signal über ihr Abstrahlelement wieder in Richtung auf den zu testenden Abstandssensor ab, wodurch beim Abstandssensor der Eindruck eines gemäß der eingestellten Zeitverzögerung entfernten Reflexionsobjektes entsteht.

Wenn das Reflexionsobjekt, von dem die von dem Abstandssensor ausgesendeten Sendesignale reflektiert werden, eine radiale Bewegungskomponente relativ zu dem Abstandssensor aufweist, dann sind die Reflexionssignale aufgrund des Dopplereffekts gegenüber der Frequenz des von dem Abstandssensor ausgesendeten Sendesignals frequenzverschoben. Viele Abstandssensoren führen auch eine Auswertung des Reflexionssignals hinsichtlich der Frequenzverschiebung durch, um so eine Geschwindigkeitsinformation hinsichtlich der radialen Bewegungskomponente zu gewinnen. Dazu muss nicht unmittelbar die Frequenz des Reflexionssignals ermittelt werden, vielmehr kann - wie im Fall der Ermittlung der Zeitverzögerung - auch eine geschickte Signalauswertung erfolgen, es kann beispielsweise die Phasenverschiebung zwischen Mischsignalen aus mehreren Sende- und Empfangssignalen ausgewertet werden; auf die genaue Auswertung kommt es vorliegend jedoch nicht an. Wichtig ist vielmehr, dass die betrachteten Prüfvorrichtungen und das betrachtete Verfahren zum Betreiben der Prüfvorrichtungen auch in der Lage sein müssen, entsprechende Frequenzverschiebungen des simulierten Reflexionssignals gegenüber der Frequenz des Empfangssignals vorzunehmen, um vorgegebene radiale Bewegungskomponenten im simulierten Reflexionssignal abzubilden.

Es gibt Reflexionsobjekte, die nicht nur eine einzige radiale Bewegungskomponente, sondern aufgrund zueinander bewegter Objektkomponenten ein Bewegungsprofil mit mehreren radialen Bewegungskomponenten aufweisen. Dies trifft beispielsweise auf Fußgänger (Arm-, Bein und Korpusbewegung), Fahrräder (Rahmen, Speichen) oder auch Hubschrauber (Korpus, Rotorblätter) zu. Unabhängig davon, ob ein Reflexionsobjekt eine oder mehrere Bewegungskomponenten aufweist, prägt es dem Reflexionssignal jedenfalls eine charakteristische Doppler-Signatur auf.

Da zukünftige Abstandssensoren bei der Auswertung eines Reflexionssignals möglicherweise auch eine Auswertung hinsichtlich komplexerer Doppler-Signaturen vornehmen werden, ist es Aufgabe der vorliegenden Erfindung, eine Prüfvorrichtung zum Test von Abstandssensoren und ein korrespondierendes Verfahren zum Betrieb einer solchen Prüfvorrichtung anzugeben, mit denen entsprechende Reflexionssignale simuliert werden können.

Die zuvor hergeleitete Aufgabe wird bei der eingangs beschriebenen Prüfvorrichtung und dem eingangs beschriebenen Verfahren zum Betreiben einer Prüfvorrichtung zum Test eines mit elektromagnetischen Wellen arbeitenden Abstandssensors dadurch gelöst, dass die Signalverarbeitungseinheit auf das abgetastete Signal oder auf das zeitverzögerte abgetastete Signal eine vorgebbare Doppler-Signatur als charakteristisches Bewegungsprofil eines zu simulierenden Reflexionsobjekts aufmoduliert. Ferner wird das zeitverzögerte abgetastete und zusätzlich mit der Doppler-Signatur versehene Signal mittels des Digital/Analog-Wandlers dann zu dem simulierten Reflexionssignal gewandelt.

Von Bedeutung ist bei der erfindungsgemäßen Prüfvorrichtung und bei dem erfindungsgemäßen Verfahren zum Betreiben dieser Prüfvorrichtung, dass das Aufmodulieren der vorgebbaren Doppler-Signatur auf das abgetastete Signal oder auf das zeitverzögerte abgetastete Signal vollständig im Bereich der digitalen Signalverarbeitung liegt, was gegenüber einer analogen Lösung erheblich einfacher und flexibler zu realisieren ist. Insoweit gehört zu der erfindungsgemäßen Lösung auch die Idee, von einer Prüfvorrichtung mit einer in digitaler Technik realisierten Signalverarbeitungseinheit auszugehen und eben nicht von einer Prüfvorrichtung mit einer durch analoge Schaltungstechnik realisierten Signalverarbeitung. In analoger Schaltungstechnik realisierte Signalverarbeitungseinheiten finden durchaus breiten Einsatz und arbeiten beispielsweise mit kaskadierten Signalverzögerungsleitungen. Die vorliegend verwendeten Signalverarbeitungseinheiten werden zum Beispiel auf Grundlage von digitalen Signalprozessoren realisiert oder auch durch konfigurierte Logikbausteine in Form von Field Programmable Gate Arrays (FPGA).

Die vorgebbare Doppler-Signatur beschreibt, welche charakteristischen Frequenzanteile das simulierte Reflexionssignal aufweisen soll. Bei einem sich dem Abstandssensor mit einer radialen Bewegungskomponente nähernden Fußgänger als Reflexionsobjekt beschreibt die Doppler-Signatur demnach mit dem größten Energieanteil den zu höheren Frequenzen hin verschobenen Anteil des vom Rumpf des Fußgängers reflektierten Radarsignals und mit kleineren Energieanteilen die Vielzahl der bezüglich des Rumpfes zu höheren und geringeren Frequenzen hin verschobenen reflektierten Signalanteile, die durch die Pendelbewegung der Gliedmaßen verursacht werden. Natürlich kann auch ein Reflexionsobjekt mit nur einer einzigen radialen Bewegungskomponente nachgebildet werden, also beispielsweise ein Kraftfahrzeug. In diesem Fall ist die Doppler-Signatur deutlich einfacher. Die Doppler-Signatur muss so gewählt werden, dass sie durch Aufmodulieren auf das abgetastete Signal oder auf das zeitverzögerte abgetastete Signal im Ergebnis zu dem gewünschten charakteristischen Bewegungsprofil im simulierten Reflexionssignal führt.

Es wird vorliegend immer begrifflich unterschieden zwischen dem Empfangssignal und dem von dem Empfangssignal abgeleiteten Empfangssignal. Das Empfangssignal an sich geht zurück auf die von dem Empfangselement der Prüfvorrichtung aufgenommene Freiraumwelle. Erfolgt eine weitere Signalverarbeitung, bevor die Abtastung durch den Analog/Digital-Wandler erfolgt, dann handelt es sich in Strenge nicht mehr um das Empfangssignal selbst, sondern um ein davon abgeleitetes Empfangssignal. Dies ist beispielsweise dann der Fall, wenn das Empfangssignal auf eine niedrigere Zwischenfrequenz heruntergemischt wird, wodurch die Anforderungen an die technische Realisierung der Signalübertragungswege und auch an die Schnelligkeit der Signalverarbeitung - insbesondere an die Analog/Digital-Wandlung - reduziert werden. Sinngemäß gilt dies natürlich auch nach der Digital/Analog-Wandlung für das simulierte Reflexionssignal und das von dem simulierten Reflexionssignal abgeleitete simulierte Reflexionssignal (zum Beispiel Heraufmischen auf die gewünschte Sendefrequenz).

Bei einer Variante der Prüfvorrichtung und des Verfahrens zum Betreiben der Prüfvorrichtung ist vorgesehen, dass die Signalverarbeitungseinheit zunächst auf das abgetastete Signal die Doppler-Signatur aufmoduliert und dann das abgetastete und mit der Doppler-Signatur versehene Signal unter Verwendung der vorgegebenen Zeitverzögerung zu dem zeitverzögerten abgetasteten Signal zeitverzögert. Entsprechend ist bei einer anderen Variante der Prüfvorrichtung und des Verfahrens zum Betreiben der Prüfvorrichtung vorgesehen, dass die Signalverarbeitungseinheit zunächst das abgetastete Signal unter Verwendung der vorgegebenen Zeitverzögerung zeitverzögert und dann die Doppler-Signatur aufmoduliert und so das zeitverzögerte abgetastete und zusätzlich mit der Doppler-Signatur versehene Signal erzeugt. Im Ergebnis kann also die Reihenfolge, in der die Zeitverzögerung und das aufmodulieren der Doppler-Signatur ausgeführt werden, unterschiedlich realisiert werden. Zu berücksichtigen ist bei der Zeitverzögerung immer die sich durch die sonstige Signalverarbeitung in der Signalverarbeitungseinheit bzw. der Prüfvorrichtung ergebende unvermeidbare Latenz; dies ist jedoch kein Unterschied zu bekannten Prüfvorrichtungen und Verfahren zum Betreiben dieser bekannten Prüfvorrichtungen.

Eine bevorzugte Ausgestaltung der Prüfvorrichtung und des Verfahrens zum Betreiben der Prüfvorrichtung zeichnet sich dadurch aus, dass die Signalverarbeitungseinheit das abgetastete Signal oder das zeitverzögerte abgetastete Signal in orthogonale Signalanteile zerlegt, die orthogonalen Signalanteile mit entsprechenden orthogonalen Signalanteilen der Doppler-Signatur moduliert und die so erhaltenen modulierten orthogonalen Signalanteile zu dem abgetasteten und zusätzlich mit der Doppler-Signatur versehenen Signal zusammenfügt. Wie sich noch zeigen wird, kann auf dieser Grundlage eine sehr einfache Realisierung des Aufmodulierens der Doppler-Signatur erfolgen, die nur auf elementaren mathematischen Operationen beruht und deshalb nur mit minimalen Latenzen einhergeht, was sehr vorteilhaft ist.

Eine Weiterbildung der vorgenannten Prüfvorrichtung und des vorgenannten Verfahrens sieht vor, dass die Signalverarbeitungseinheit die orthogonalen Signalanteile aus der Doppler-Signatur ableitet, insbesondere durch I/Q-Dekomposition der Doppler-Signatur. Alternativ werden der Signalverarbeitungseinheit die orthogonalen Signalanteile als die Doppler-Signatur vorgegeben, der Informationsgehalt der verschiedenen Darbietungsformen der Doppler-Signatur ist hinsichtlich der Beschreibung eines charakteristischen Bewegungsprofils gleich.

Eine weitere bevorzugte Ausgestaltung der zuvor beschriebenen Prüfvorrichtung und des zuvor beschriebenen Verfahrens zum Betreiben der Prüfvorrichtung ist dadurch gekennzeichnet, dass die Zerlegung des abgetasteten Signals oder des zeitverzögerten abgetasteten Signals in orthogonale Signalanteile durch I/Q-Dekomposition erfolgt, und dass die Zusammenfügung der modulierten orthogonalen Signalanteile zu dem abgetasteten und zusätzlich mit der Doppler-Signatur versehenen Signal durch I/Q-Komposition erfolgt. Bei dem angesprochenen I/Q-Verfahren wird bei der Dekomposition ein Signal in eine In-Phase- und eine Quadratur-Komponente zerlegt (deshalb I/Q), aus denen dann eine Phaseninformation gewonnen werden kann. Umgekehrt kann bei der Komposition der I/Q-Komponenten ein Signal mit einer bestimmten Phasenlage erzeugt werden.

Eine besonders bevorzugte Ausgestaltung der zuvor beschriebenen Prüfvorrichtung und des zuvor beschriebenen Verfahrens zum Betreiben der Prüfvorrichtung sieht vor, dass die Zerlegung des abgetasteten Signals oder des zeitverzögerten abgetasteten Signals in orthogonale Signalanteile durch eine 90°-Phasenverschiebung des abgetasteten Signals oder des zeitverzögerten abgetasteten Signals erfolgt, und/oder dass die Modulation der orthogonalen Signalanteile durch Multiplikation mit den entsprechenden orthogonalen Signalanteilen der Doppler-Signatur erfolgt, und/oder dass das Zusammenfügen der modulierten orthogonalen Signalanteile zu dem abgetasteten und zusätzlich mit der Doppler-Signatur versehenen Signal durch Addition der modulierten orthogonalen Signalanteile erfolgt. Die 90°-Phasenverschiebung des abgetasteten Signals oder des zeitverzögerten abgetasteten Signals kann beispielsweise durch eine als digitales FIR-Filter realisierte Hilbert-Transformation umgesetzt werden. Insgesamt ist diese Ausgestaltung sehr einfach zu realisieren und aufgrund der praktisch nur verwendeten Elementaroperationen (Multiplikation, Addition) ist sie nur mit minimalen - und idealerweise auch gleichbleibenden - Latenzen verbunden; dies gilt auch für die digitale Umsetzung eines FIR-Filters zur 90°-Phasenverschiebung.

Auch wenn die erfindungsgemäße Vorrichtung und das erfindungsgemäße Verfahren zuvor immer gemeinsam erläutert worden sind, soll noch einmal klargestellt werden, dass das Verfahren computerimplementiert ist und dem Betrieb einer Prüfvorrichtung zum Test eines mit elektromagnetischen Wellen arbeitenden Abstandssensors dient. Zur Durchführung des Verfahrens weist die Prüfvorrichtung ein Empfangselement zum Empfangen einer elektromagnetischen Freiraumwelle als Empfangssignal, ein Abstrahlelement zur Abstrahlung eines elektromagnetischen Ausgangssignals, einen Analog/DigitalWandler, eine Signalverarbeitungseinheit und einen Digital/Analog-Wandler auf. Im Simulationsbetrieb wird das Empfangssignal oder ein von dem Empfangssignal abgeleitetes Empfangssignal mit dem Analog/Digital-Wandler in ein abgetastetes Signal gewandelt, das abgetastete Signal wird mit der Signalverarbeitungseinheit unter Verwendung einer vorgegebenen Zeitverzögerung zu einem zeitverzögerten abgetasteten Signal zeitverzögert und das zeitverzögerte abgetastete Signal wird mit dem Digital/Analog-Wandler zu einem simulierten Reflexionssignal gewandelt, wobei das simulierte Reflexionssignal oder ein von dem simulierten Reflexionssignal abgeleitetes simuliertes Reflexionssignal dann als Ausgangssignal über das Abstrahlelement abgestrahlt wird. Zur einfachen Nachbildung eines charakteristischen Bewegungsprofils eines zu simulierenden Reflexionsobjekts sieht das Verfahren vor, dass die Signalverarbeitungseinheit auf das abgetastete Signal oder auf das zeitverzögerte abgetastete Signal eine vorgebbare Doppler-Signatur als charakteristisches Bewegungsprofil eines zu simulierenden Reflexionsobjekts aufmoduliert, und dass das zeitverzögerte abgetastete und zusätzlich mit der Doppler-Signatur versehene Signal mittels des Digital/Analog-Wandlers zu dem simulierten Reflexionssignal gewandelt wird. Die detaillierteren Ausgestaltungen der Verfahrensschritte sind zuvor ausführlich beschrieben worden, meist in Zusammenhang mit der Signalverarbeitungseinheit. Die Bezeichnung der Signalverarbeitungseinheit ist funktional zu verstehen. Zur Signalverarbeitungseinheit gehören alle Komponenten, die erforderlich sind, um die der Signalverarbeitungseinheit zugeschriebene Funktionalität zu erfüllen. Ob es sich dabei um ein Bauteil oder mehrere Bauteile handelt, ist unerheblich.

Beansprucht ist ferner ein Computerprogramm mit Anweisungen, die, wenn sie mit einer Signalverarbeitungseinheit einer Prüfvorrichtung zum Test eines mit elektromagnetischen Wellen arbeitenden Abstandssensors ausgeführt werden, die Signalverarbeitungseinheit veranlassen, das zuvor beschriebene Verfahren zum Betrieb der Prüfvorrichtung auszuführen.

Im Einzelnen gibt es nun eine Vielzahl von Möglichkeiten, die erfindungsgemäße Prüfvorrichtung und das erfindungsgemäße Verfahren gemäß den unabhängigen Patentansprüchen weiterzubilden und auszugestalten. Dies ist im Zusammenhang mit der Zeichnung in den nachfolgenden Figuren dargestellt. In der Zeichnung zeigen

Fig. 1     schematisch eine aus dem Stand der Technik bekannte Prüfvorrichtung zum Test eines mit elektromagnetischen Wellen arbeitenden Abstandssensors und auch ein entsprechendes Verfahren zum Betreiben einer solchen Prüfvorrichtung,

Fig. 2 schematisch ein Ausführungsbeispiel einer Prüfvorrichtung und eines Verfahrens zum Betreiben der Prüfvorrichtung mit der Möglichkeit des Aufmodulierens einer Doppler-Signatur,

Fig. 3 schematisch ein weiteres Ausführungsbeispiel einer Prüfvorrichtung und eines Verfahrens zum Betreiben der Prüfvorrichtung mit der Möglichkeit des Aufmodulierens einer Doppler-Signatur,

Fig. 4 schematisch ein weiteres Ausführungsbeispiel einer Prüfvorrichtung und eines Verfahrens zum Betreiben der Prüfvorrichtung mit der Möglichkeit des Aufmodulierens einer Doppler-Signatur unter Zerlegung des abgetasteten Signals in orthogonale Signalanteile,

Fig. 5 schematisch ein weiteres Ausführungsbeispiel einer Prüfvorrichtung und eines Verfahrens zum Betreiben der Prüfvorrichtung mit der Möglichkeit des Aufmodulierens einer Doppler-Signatur, wobei die Signalverarbeitungseinheit aus der Doppler-Signatur orthogonale Signalanteile ableitet,

Fig. 6 schematisch ein weiteres Ausführungsbeispiel einer Prüfvorrichtung und eines Verfahrens zum Betreiben der Prüfvorrichtung mit der Möglichkeit des Aufmodulierens einer Doppler-Signatur, wobei das Aufmodulieren der Doppler-Signatur ausschließlich mittels Additionen und Multiplikationen durchgeführt wird und

Fig. 7 schematisch die Realisierung und die Wirkung des Aufmodulierns einer Doppler-Signatur anhand eines einfachen Beispiels.

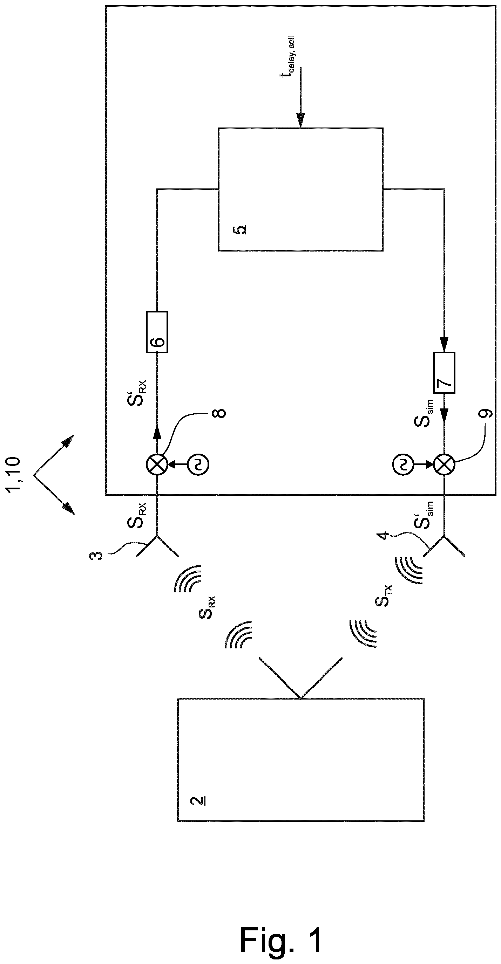

In den Fig. 1 bis 7 sind in unterschiedlichen Ausschnitten, Aspekten und Detaillierungsgraden eine Prüfvorrichtung 1 zum Test eines mit elektromagnetischen Wellen arbeitenden Abstandssensors 2 und ein Verfahren 10 zum Betreiben einer entsprechenden Prüfvorrichtung 1 dargestellt. Es wird in den Figuren nicht unterschieden zwischen einer ausschließlichen Darstellung der Prüfvorrichtung 1 und des Verfahrens 10, was auch nicht sinnvoll wäre, da das Verfahren 10 auf einer Prüfvorrichtung 1 und mit den Elementen der Prüfvorrichtung 1 ausgeführt wird.

Fig. 1 zeigt den Gesamtaufbau beim Test des zu überprüfenden Abstandssensors 2. Der Abstandssensor 2 emittiert eine elektromagnetische Freiraumwelle in Richtung auf die Prüfvorrichtung 1 und empfängt ein simuliertes elektromagnetisches Reflexionssignal $S_{TX}$, das von der Prüfvorrichtung 1 generiert wird. Zum Empfang der von dem Abstandssensor 2 emittierten Freiraumwelle weist die Prüfvorrichtung 1 ein Empfangselement 3 auf und zum Abstrahlen des simulierten elektromagnetischen Reflexionssignals $S_{TX}$ weist die Prüfvorrichtung 1 ein Abstrahlelement 4 auf. Der Abstandssensor 2 an sich gehört nicht mit zur Prüfvorrichtung 1, gleichwohl ist es wichtig, zu verstehen, wie die Prüfvorrichtung 1 mit dem Abstandssensor 2 zusammenwirkt.

Hier werden solche Prüfvorrichtungen 1 betrachtet, deren Signalverarbeitung digital implementiert ist, also als ein Abtastsystem. Insoweit wird das von dem Empfangssignal $S_{RX}$ durch Heruntermischen mittels eines Eingangsmischers 8 abgeleitete Empfangssignal $S'_{RX}$ mittels eines Analog/Digital-Wandlers 6 abgetastet. Das abgetastete Signal $S_{sample}$ wird über eine Signalverarbeitungseinheit 5 geführt, wobei der Signalverarbeitungseinheit 5 eine Zeitverzögerung $t_{delay,soll}$ vorgebbar ist. Das Eingangssignal der Signalverarbeitungseinheit 5, also das abgetastete Signal $S_{sample}$, wird so zu einem zeitverzögerten abgetasteten Signal $S_{sample,sim}$ zeitverzögert 11. Das zeitverzögerte abgetastete Signal $S_{sample,sim}$ wird dann mittels eines Digital/Analog-Wandlers 7 zu einem analogen simulierten Reflexionssignal $S_{sim}$ gewandelt, mittels des Ausgangsmischers 9 wieder auf die erforderliche Sendefrequenz hochgemischt und dann als abgeleitetes simuliertes Reflexionssignal $S'_{sim}$ über das Abstrahlelement 4 abgestrahlt. Das Heruntermischen des Empfangssignals $S_{RX}$ auf eine niedrigere Zwischenfrequenz und das Heraufmischen des simulierten Reflexionssignals $S_{sim}$ auf die erforderliche höhere Sendefrequenz sind optional und ermöglichen eine digitale Signalverarbeitung mit geringeren Abtastraten und geringeren Taktungen als denen, die bei einer Signalverarbeitung bei der originären Empfangsfrequenz des Empfangssignals $S_{RX}$ erforderlich wären.

In Fig. 1 ist angedeutet, dass die zu erzielende Zeitverzögerung $t_{delay,soll}$ der Signalverarbeitungseinheit 5 als Information zugeführt wird. Bei der hier dargestellten Prüfvorrichtung 1 kommt es nicht auf die technische Umsetzung an, wie der Signalverarbeitungseinheit 5 diese Information genau zugeführt wird. Üblicherweise wird die Vorgabe für die einzustellende Zeitverzögerung aus einem Umfeldsimulator kommen, der die zu simulierende Szene mit Umfeldobjekten simuliert und entsprechende Positions-, Geschwindigkeits- und/oder Beschleunigungsinformationen der Umgebungsobjekte bereithält. Ist beispielsweise bekannt, dass der Abstand des zu simulierenden Objekts von dem zu testenden Abstandssensor 30 m beträgt, so wird unter Berücksichtigung der Lichtgeschwindigkeit als Signallaufzeit einer elektromagnetischen Welle eine entsprechende Zeitverzögerung berechnet und als Zeitverzögerung $t_{delay,soll}$ vorgegeben.

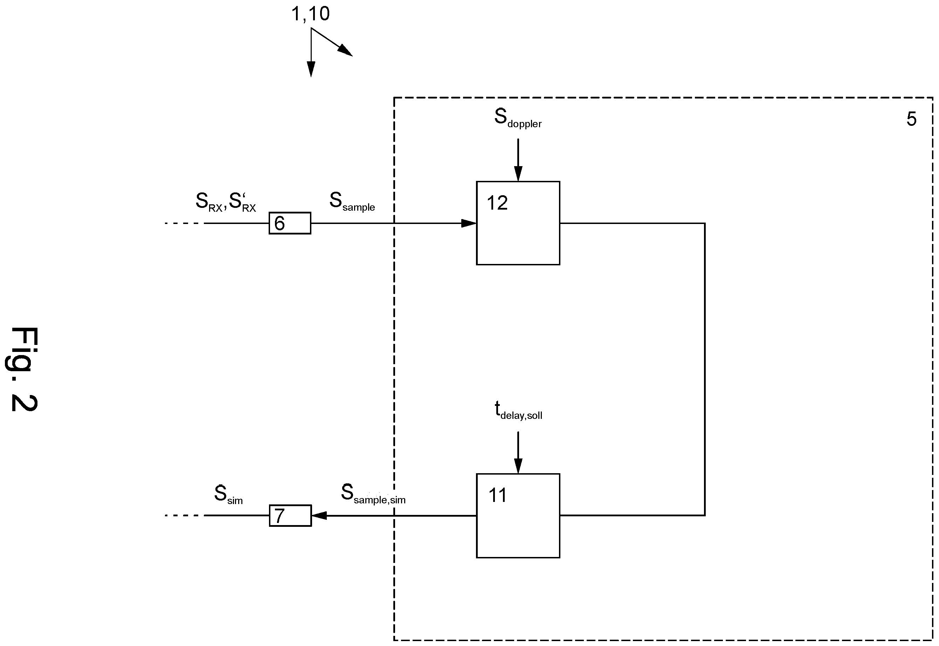

In den Fig. 2 bis 7 ist dargestellt, wie das simulierte Reflexionssignal $S_{sim}$ zusätzlich mit einer Doppler-Signatur $S_{doppler}$ versehen werden kann, um Reflexionsobjekte mit mit einem beliebigen Bewegungsmuster simulieren zu können, insbesondere auch solche Reflexionsobjekte mit komplizierten Bewegungsmustern, wie beispielsweise Fußgänger.

In allen dargestellten Ausführungsbeispielen in den Fig. 2 bis 7 wird dies dadurch erreicht, dass die Signalverarbeitungseinheit 5 auf das abgetastete Signal $S_{sample}$ oder auf das zeitverzögerte abgetastete Signal $S_{sample,sim}$ eine vorgebbare Doppler-Signatur $S_{doppler}$ als charakteristisches Bewegungsprofil eines zu simulierenden Reflexionsobjekts aufmoduliert 12. Danach wird das zeitverzögerte abgetastete und zusätzlich mit der Doppler-Signatur $S_{doppler}$ versehene Signal $S_{sample,sim}$ mittels des Digital/Analog-Wandlers 7 zu dem simulierten Reflexionssignal $S_{sim}$ gewandelt.

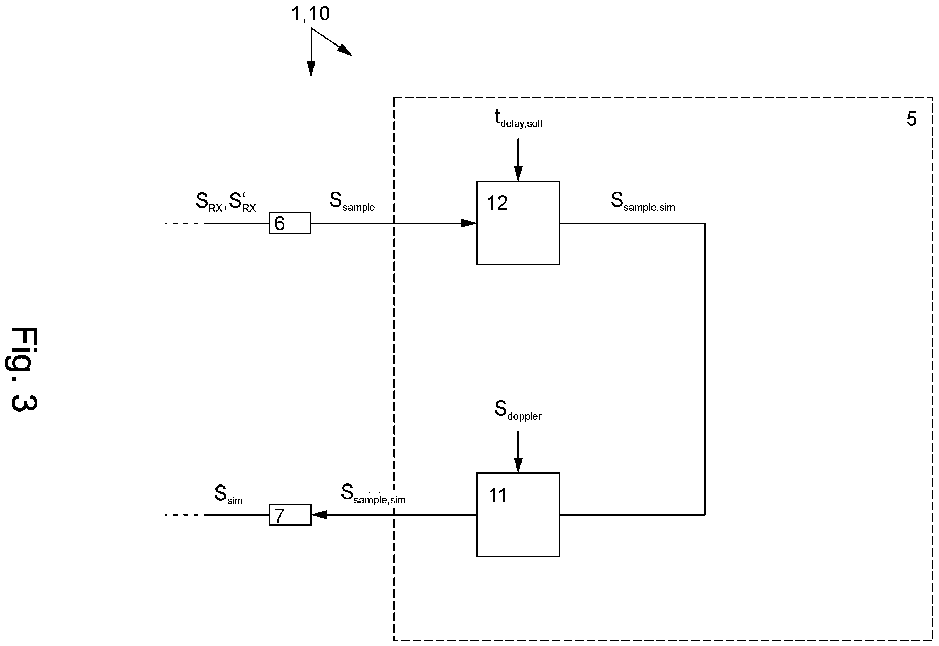

Bei der Prüfvorrichtung 1 und dem Verfahren 10 gemäß Fig. 2 moduliert 12 die Signalverarbeitungseinheit 5 zunächst auf das abgetastete Signal $s_{sample}$ die Doppler-Signatur $S_{doppler}$ auf und danach wird das abgetastete und mit der Doppler-Signatur $S_{doppler}$ versehene Signal $s_{sample}$ unter Verwendung der vorgegebenen Zeitverzögerung $t_{delay, soll}$ zu dem zeitverzögerten abgetasteten Signal $S_{sample,sim}$ zeitverzögert 11. Demgegenüber wird bei der Prüfvorrichtung 1 gemäß Fig. 3 durch die Signalverarbeitungseinheit 5 zunächst das abgetastete Signal $s_{sample}$ unter Verwendung der vorgegebenen Zeitverzögerung $t_{delay, soll}$ zeitverzögert 11, danach wird die Doppler-Signatur $S_{doppler}$ aufmoduliert 12 und so das zeitverzögerte abgetastete und zusätzlich mit der Doppler-Signatur $S_{doppler}$ versehene Signal $S_{sample,sim}$ erzeugt.

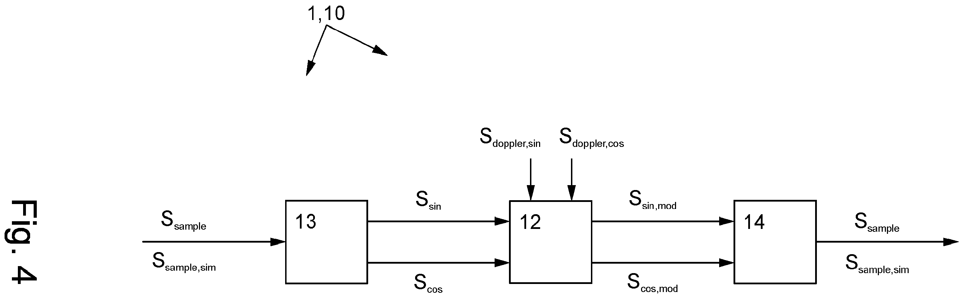

In Fig. 4 ist dargestellt, dass die Signalverarbeitungseinheit 5 das abgetastete Signal $s_{sample}$ oder das zeitverzögerte abgetastete Signal $S_{sample,sim}$ - auf die Reihenfolge kommt es nicht an - in orthogonale Signalanteile $S_{sin}$, $S_{cos}$ zerlegt 13, die orthogonalen Signalanteile $S_{sin}$, $S_{cos}$ mit entsprechenden orthogonalen Signalanteilen $S_{doppler,sin}$, $S_{doppler,cos}$ der Doppler-Signatur $S_{doppler}$ moduliert 12 und die so erhaltenen modulierten orthogonalen Signalanteile $S_{sin,mod}$, $S_{cos,mod}$ zu dem abgetasteten und zusätzlich mit der Doppler-Signatur $S_{doppler}$ versehene Signal $S_{sample,sim}$ zusammenfügt 14.

Es gibt verschiedene Möglichkeiten, die orthogonale Signalzerlegung zu realisieren. Bei dem Ausführungsbeispiel für die Prüfvorrichtung 1 und das Verfahren 10 gemäß Fig. 4 erfolgt die Zerlegung 13 des abgetasteten Signals $s_{sample}$ oder des zeitverzögerten abgetasteten Signals $S_{sample,sim}$ in orthogonale Signalanteile $S_{sin}$, $S_{cos}$ durch I/Q-Dekomposition und die das Zusammenfügen 14 der modulierten orthogonalen Signalanteile $S_{sin,mod}$, $S_{cos,mod}$ zu dem abgetasteten und zusätzlich mit der Doppler-Signatur $S_{doppler}$ versehenen Signal $S_{sample,sim}$ erfolgt durch I/Q-Komposition. Wie bereits im allgemeinen Beschreibungsteil ausgeführt, handelt es sich hier um die an sich bekannte Zerlegung eines Signals in eine In-Phase- und eine Quadratur-Komponente und um die Zusammensetzung eines Signals aus eben diesen orthogonalen Signalkomponenten.

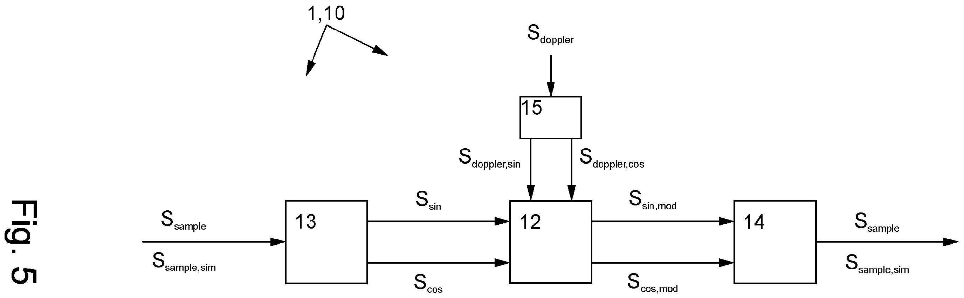

Bei dem Ausführungsbeispiel der Prüfvorrichtung 1 und des Verfahrens 10 gemäß Fig. 5 leitet die Signalverarbeitungseinheit 5 die orthogonalen Signalanteile $S_{doppler,sin}$, $S_{doppler,cos}$ aus der Doppler-Signatur $S_{doppler}$ ab 15, vorliegend durch I/Q-Dekomposition der Doppler-Signatur $S_{doppler}$. Demgegenüber sind bei der Prüfvorrichtung 1 und dem Verfahren 10 gemäß Fig. 4 die orthogonalen Signalanteile $S_{doppler,sin}$, $S_{doppler,cos}$ als die Doppler-Signatur $S_{doppler}$ vorgegeben.

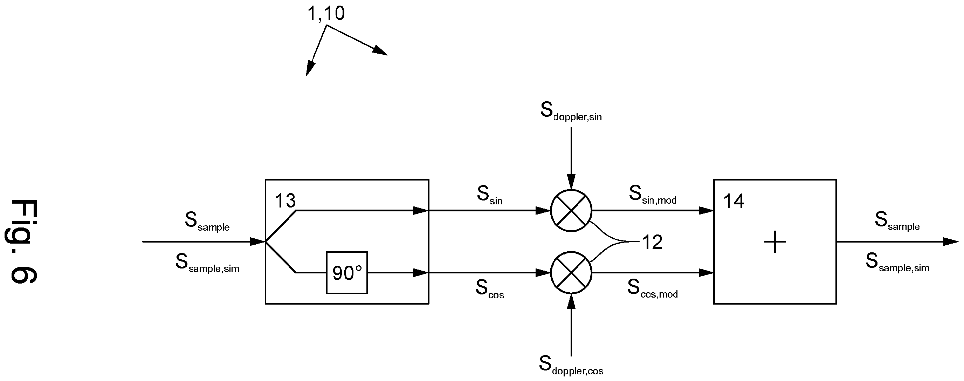

Fig. 6 zeigt ein besonders bevorzugtes Ausführungsbeispiel der Prüfvorrichtung 1 und des Verfahrens 10, das sich dadurch auszeichnet, dass die Zerlegung 13 des abgetasteten Signals $s_{sample}$ oder des zeitverzögerten abgetasteten Signals $S_{sample,sim}$ in orthogonale Signalanteile $S_{sin}$, $S_{cos}$ durch eine 90°-Phasenverschiebung des abgetasteten Signals $S_{sample}$ oder des zeitverzögerten abgetasteten Signals $S_{sample,sim}$ erfolgt. Ferner wird die Modulation 12 der orthogonalen Signalanteile $S_{sin}$, $S_{cos}$ durch Multiplikation mit den entsprechenden orthogonalen Signalanteilen $S_{doppler,sin}$, $S_{doppler,cos}$ der Doppler-Signatur $S_{doppler}$, realisiert und das Zusammenfügen 14 der modulierten orthogonalen Signalanteile $S_{sin,mod}$, $S_{cos,mod}$ zu dem abgetasteten und zusätzlich mit der Doppler-Signatur $S_{doppler}$ versehenen Signal $S_{sample,sim}$ erfolgt durch Addition der modulierten orthogonalen Signalanteile $S_{sin,mod}$, $S_{cos,mod}$. Es werden also nur mathematische Grundoperationen verwendet, die vergleichsweise schnell durchgeführt werden können. Das gilt übrigens auch für die 90°-Verschiebung des abgetasteten Signals, wenn diese beispielsweise durch eine mittels eines digitalen FIR-Filters (Additionen, Multiplikationen, Totzeiten) realisierte Hilbert-Transformation durchgeführt wird.

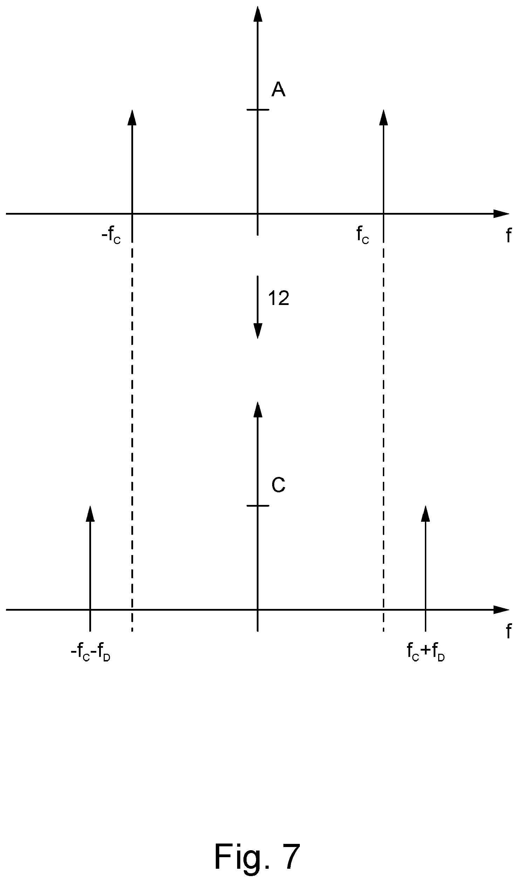

In Fig. 7 ist anhand eines einfachen Beispiels die konkrete Umsetzung des Aufmodulierens 12 einer Doppler-Signatur $S_{doppler}$ auf das abgetastete Signal $S_{sample}$ oder auf das zeitverzögerte abgetastete Signal $S_{sample,sim}$ dargestellt. Die Vorgänge könnten so beispielsweise mit der Prüfvorrichtung gemäß Fig. 6 durchgeführt werden. Das abgetastete Signal $S_{sample}$ ist eine harmonische Schwingung mit der Frequenz fc, auf die die Doppler-Signatur $S_{doppler}$ aufgeprägt werden soll. Die Doppler-Signatur soll einen Frequenzhub $f_D$ hin zu höheren Frequenzen bewirken. In Fig. 7 ist oben dargestellt das Amplitudenspektrum des abgetasteten Signals $S_{sample}$, wobei hier stets mit einer zeitkontinuierlichen Schreibweise gearbeitet wird, um die Darstellung möglichst einfach zu halten. Unter dieser Voraussetzung lässt sich das abgetastete Signal $s_{sample}$ demnach beschreiben durch:

$$S_{sample} = A * \cos(2\pi * f_C * t).$$

Das reelwertige Signal hat im komplexwertigen Frequenzspektrum bzw. im Amplitudenspektrum Signalanteile bei positiven und negativen Frequenzen, in diesem einfachen Beispiel bei der Frequenz fc mit der Amplitude A, siehe oberen Teil der Fig. 7.

Die Zerlegung 13 des abgetasteten Signals $s_{sample}$ in orthogonale Signalanteile $S_{sin}$, $S_{cos}$ geschieht durch nicht näher dargestellte 90°-Phasenverschiebung des abgetasteten Signals $S_{sample}$. Es resultiert also:

$$S_{cos} = A*\cos(\omega_C*t - \pi/2)$$

$$S_{sin} = A*\cos(\omega_C*t).$$

Das simulierte Reflexionssignal soll im Ergebnis die Frequenz $f_C+f_D$ aufweisen und auf die Amplitude C gedämpft sein, siehe unteren Teil von Fig. 7. Um das zu erreichen, wird mit den folgenden orthogonalen Signalanteilen $S_{doppler,sin}$, $S_{doppler,cos}$ der Doppler-Signatur $S_{doppler}$ gearbeitet:

$$S_{doppler,cos} = C/A*\cos(\omega_D*t + \pi/2)$$

$$S_{doppler,sin} = C/A*\cos(\omega_D*t).$$

Damit ergeben sich nach der Modulation 12 der orthogonalen Signalanteile $S_{sin}$, $S_{cos}$ durch Multiplikation mit den entsprechenden orthogonalen Signalanteilen $S_{doppler,sin}$, $S_{doppler,cos}$ der Doppler-Signatur $S_{doppler}$ die folgenden Signale:

$$S_{cos,mod} = C*\cos(\omega_C*t - \pi/2)*\cos(\omega_D*t + \pi/2)$$

$$S_{sin,mod} = C*\cos(\omega_C*t)*\cos(\omega_D*t).$$

Das Zusammenfügen 14 der modulierten orthogonalen Signalanteile $S_{sin,mod}$, $S_{cos,mod}$ zu dem abgetasteten und zusätzlich mit der Doppler-Signatur $S_{doppler}$ versehenen Signal $S_{sample,sim}$ erfolgt durch Addition der modulierten orthogonalen Signalanteile $S_{sin,mod}$, $S_{cos,mod}$:

$$S_{sample,sim} = C*[\cos(\omega_C*t)*\cos(\omega_D*t) + \cos(\omega_C*t - \pi/2)*\cos(\omega_D*t + \pi/2)]$$

$$= C*[\cos(\omega_C*t)*\cos(\omega_D*t) - \sin(\omega_C*t)*\sin(\omega_D*t)]$$

$$= C*\cos(\{\omega_C + \omega_D\}*t)$$

Sinngemäß können beliebige andere Doppler-Signaturen $S_{doppler}$ auf sehr einfache Weise auf das abgetastete Signal $S_{sample}$ oder auf das zeitverzögerte abgetastete Signal $S_{sample,sim}$ aufmoduliert 12 werden.

**Bezugszeichen**

1     Prüfvorrichtung
2     Abstandssensor
3     Empfangselement
4     Abstrahlelement
5     Signalverarbeitungseinheit
6     Analog/Digital-Wandler
7     Digital/Analog-Wandler

8     Eingangsmischer

9     Ausgangsmischer

10    Verfahren

11    zeitverzögern

12    aufmodulieren einer Doppler-Signatur

13    zerlegen in orthogonale Signalanteile

14    zusammenfügen modulierter orthogonaler Signalanteile

15    ableiten orthogonaler Signalanteile aus der der Doppler-Signatur

| | |
|---|---|
| $S_{RX}$ | Empfangssignal |
| $S'_{RX}$ | von dem Empfangssignal $S_{RX}$ abgeleitetes Empfangssignal |
| $S_{TX}$ | Ausgangssignal |
| $S_{sample}$ | abgetastetes Signal |
| $t_{delay, soll}$ | vorgebbare Zeitverzögerung |
| $S_{sample,sim}$ | zeitverzögertes abgetastetes Signal und ggf. zusätzlich mit einer Doppler-Signatur versehenes Signal |
| $S_{sim}$ | simuliertes Reflexionssignal |
| $S'_{sim}$ | abgeleitetes simuliertes Reflexionssignal |
| $S_{doppler}$ | Doppler-Signatur |
| $S_{sin}, S_{cos}$ | orthogonale Signalanteile des abgetasteten Signals oder des zeitverzögerten abgetasteten Signals |
| $S_{doppler,sin}, S_{doppler,cos}$ | orthogonale Signalanteile der Doppler-Signatur |
| $S_{sin,mod}, S_{cos,mod}$ | modulierte orthogonale Signalanteile |

**Patentansprüche**

1. Prüfvorrichtung (1) zum Test eines mit elektromagnetischen Wellen arbeitenden Abstandssensors (2), mit einem Empfangselement (3) zum Empfangen einer elektromagnetischen Freiraumwelle als Empfangssignal ($S_{RX}$), mit einem Abstrahlelement (4) zur Abstrahlung eines elektromagnetischen Ausgangssignals ($S_{TX}$), wobei im Simulationsbetrieb das Empfangssignal ($S_{RX}$) oder ein von dem Empfangssignal ($S_{RX}$) abgeleitetes Empfangssignal ($S'_{RX}$) mittels eines Analog/Digital-Wandlers in ein abgetastetes Signal ($S_{sample}$) gewandelt wird, das abgetastete Signal ($S_{sample}$) mit einer Signalverarbeitungseinheit (5) unter Verwendung einer vorgebbaren Zeitverzögerung ($t_{delay, soll}$) zu einem zeitverzögerten abgetasteten Signal ($S_{sample,sim}$) zeitverzögert (11) wird, das zeitverzögerte abgetastete Signal ($S_{sample,sim}$) mittels eines Digital/Analog-Wandlers zu einem simulierten Reflexionssignal ($S_{sim}$) gewandelt wird, wobei das simulierte Reflexionssignal ($S_{sim}$) oder ein von dem simulierten Reflexionssignal ($S_{sim}$) abgeleitetes simuliertes Reflexionssignal ($S'_{sim}$) als Ausgangssignal ($S_{TX}$) über das Abstrahlelement (4) abgestrahlt wird, **dadurch gekennzeichnet,**

    **dass** die Signalverarbeitungseinheit (5) auf das abgetastete Signal ($S_{sample}$) oder auf das zeitverzögerte abgetastete Signal ($S_{sample,sim}$) eine vorgebbare Doppler-Signatur ($S_{doppler}$) als charakteristisches Bewegungsprofil eines zu simulierenden Reflexionsobjekts aufmoduliert (12) und das zeitverzögerte abgetastete und zusätzlich mit der Doppler-Signatur ($S_{doppler}$) versehene Signal ($S_{sample,sim}$) mittels des Digital/Analog-Wandlers zu dem simulierten Reflexionssignal ($S_{sim}$) gewandelt wird.

2. Prüfvorrichtung (1) gemäß Anspruch 1, **dadurch gekennzeichnet, dass** die Signalverarbeitungseinheit (5) zunächst auf das abgetastete Signal ($S_{sample}$) die Doppler-Signatur ($S_{doppler}$) aufmoduliert (12) und dann das abgetastete und mit der Doppler-Signatur versehene Signal ($S_{sample}$) unter Verwendung der vorgegebenen Zeitverzögerung ($t_{delay, soll}$) zu dem zeitverzögerten abgetasteten Signal ($S_{sample,sim}$) zeitverzögert (11), oder dass die Signalverarbeitungseinheit (5) zunächst das abgetastete Signal ($S_{sample}$) unter Verwendung der vorgegebenen Zeitverzögerung ($t_{delay, soll}$) zeitverzögert (11) und dann die Doppler-Signatur ($S_{doppler}$) aufmoduliert (12) und so das zeitverzögerte abgetastete und zusätzlich mit der Doppler-Signatur ($S_{doppler}$) versehene Signal ($S_{sample,sim}$) erzeugt.

3. Prüfvorrichtung (1) gemäß Anspruch 1 oder 2, **dadurch gekennzeichnet, dass** die Signalverarbeitungseinheit (5) das abgetastete Signal ($S_{sample}$) oder das zeitverzögerte abgetastete Signal ($S_{sample,sim}$) in orthogonale Signalanteile ($S_{sin}, S_{cos}$) zerlegt (13), die orthogonalen Signalanteile ($S_{sin}, S_{cos}$) mit entsprechenden orthogonalen Signalanteilen ($S_{doppler,sin}, S_{doppler,cos}$) der Doppler-Signatur ($S_{doppler}$) moduliert (12) und die so erhaltenen modulierten orthogonalen Signalanteile ($S_{sin,mod}, S_{cos,mod}$) zu dem abgetasteten und zusätzlich mit der Doppler-Signatur ($S_{doppler}$) versehene Signal ($S_{sample,sim}$) zusammenfügt (14).

4. Prüfvorrichtung (1) gemäß Anspruch 3, **dadurch gekennzeichnet, dass** die Signalverarbeitungseinheit (5) die orthogonalen Signalanteile ($S_{doppler,sin}$, $S_{doppler,cos}$) aus der Doppler-Signatur ($S_{doppler}$) ableitet (15), insbesondere durch I/Q-Dekomposition der Doppler-Signatur ($S_{doppler}$), oder der Signalverarbeitungseinheit (5) die orthogonalen Signalanteile ($S_{doppler,sin}$, $S_{doppler,cos}$) als die Doppler-Signatur ($S_{doppler}$) vorgegeben sind.

5. Prüfvorrichtung (1) gemäß Anspruch 3 oder 4, **dadurch gekennzeichnet, dass** die Zerlegung (13) des abgetasteten Signals ($S_{sample}$) oder des zeitverzögerten abgetasteten Signals ($S_{sample,sim}$) in orthogonale Signalanteile ($S_{sin}$, $S_{cos}$) durch I/Q-Dekomposition erfolgt und dass die Zusammenfügung (14) der modulierten orthogonalen Signalanteile ($S_{sin,mod}$, $S_{cos,mod}$) zu dem abgetasteten und zusätzlich mit der Doppler-Signatur ($S_{doppler}$) versehenen Signal ($S_{sample,sim}$) durch I/Q-Komposition erfolgt.

6. Prüfvorrichtung (1) gemäß Anspruch 3 oder 4, **dadurch gekennzeichnet, dass** die Zerlegung (13) des abgetasteten Signals ($S_{sample}$) oder des zeitverzögerten abgetasteten Signals ($S_{sample,sim}$) in orthogonale Signalanteile ($S_{sin}$, $S_{cos}$) durch eine 90°-Phasenverschiebung des abgetasteten Signals ($S_{sample}$) oder des zeitverzögerten abgetasteten Signals ($S_{sample,sim}$) erfolgt, und/oder dass die Modulation (12) der orthogonalen Signalanteile ($S_{sin}$, $S_{cos}$) durch Multiplikation mit den entsprechenden orthogonalen Signalanteilen ($S_{doppler,sin}$, $S_{doppler,cos}$) der Doppler-Signatur ($S_{doppler}$) erfolgt, und/oder dass das Zusammenfügen (14) der modulierten orthogonalen Signalanteile ($S_{sin,mod}$, $S_{cos,mod}$) zu dem abgetasteten und zusätzlich mit der Doppler-Signatur ($S_{doppler}$) versehenen Signal ($S_{sample,sim}$) durch Addition der modulierten orthogonalen Signalanteile ($S_{sin,mod}$, $S_{cos,mod}$) erfolgt.

7. Computerimplementiertes Verfahren (10) zum Betreiben einer Prüfvorrichtung (1) zum Test eines mit elektromagnetischen Wellen arbeitenden Abstandssensors (2), wobei die Prüfvorrichtung ein Empfangselement (3) zum Empfangen einer elektromagnetischen Freiraumwelle als Empfangssignal ($S_{RX}$), ein Abstrahlelement (4) zur Abstrahlung eines elektromagnetischen Ausgangssignals ($S_{TX}$), einen Analog/Digital-Wandler (6), eine Signalverarbeitungseinheit (5) und einen Digital/Analog-Wandler (7) aufweist, wobei im Simulationsbetrieb das Empfangssignal ($S_{RX}$) oder ein von dem Empfangssignal ($S_{RX}$) abgeleitetes Empfangssignal ($S'_{RX}$) mit dem Analog/Digital-Wandler in ein abgetastetes Signal ($S_{sample}$) gewandelt wird, das abgetastete Signal ($S_{sample}$) mit der Signalverarbeitungseinheit (5) unter Verwendung einer vorgebbaren Zeitverzögerung ($t_{delay,\ soll}$) zu einem zeitverzögerten abgetasteten Signal ($S_{sample,sim}$) zeitverzögert (11) wird, das zeitverzögerte abgetastete Signal ($S_{sample,sim}$) mit dem Digital/Analog-Wandler (7) zu einem simulierten Reflexionssignal ($S_{sim}$) gewandelt wird, wobei das simulierte Reflexionssignal ($S_{sim}$) oder ein von dem simulierten Reflexionssignal ($S_{sim}$) abgeleitetes simuliertes Reflexionssignal ($S'_{sim}$) als Ausgangssignal ($S_{TX}$) über das Abstrahlelement (4) abgestrahlt wird,
   **dadurch gekennzeichnet,**

   **dass** die Signalverarbeitungseinheit (5) auf das abgetastete Signal ($S_{sample}$) oder auf das zeitverzögerte abgetastete Signal ($S_{sample,sim}$) eine vorgebbare Doppler-Signatur ($S_{doppler}$) als charakteristisches Bewegungsprofil eines zu simulierenden Reflexionsobjekts aufmoduliert (12) und
   das zeitverzögerte abgetastete und zusätzlich mit der Doppler-Signatur ($S_{doppler}$) versehene Signal ($S_{sample,sim}$) mittels des Digital/Analog-Wandlers (7) zu dem simulierten Reflexionssignal ($S_{sim}$) gewandelt wird.

8. Verfahren (10) nach Anspruch 1, **dadurch gekennzeichnet, dass** die Signalverarbeitungseinheit (5) so ausgestaltet ist, dass sie im Betrieb Verfahrensschritte gemäß dem Kennzeichnungsteil wenigstens eines Anspruchs der Ansprüche 2 bis 6 ausführt.

9. Computerprogramm mit Anweisungen, die, wenn sie mit einer Signalverarbeitungseinheit (5) einer Prüfvorrichtung (1) zum Test eines mit elektromagnetischen Wellen arbeitenden Abstandssensors (2) ausgeführt werden, die Signalverarbeitungseinheit (5) veranlassen, das Verfahren (10) gemäß einem der Ansprüche 7 oder 8 auszuführen.

Fig. 1

Fig. 2

Fig. 3

Fig. 4

Fig. 5

Fig. 6

A

$-f_C$     $f_C$     f

12

C

$-f_C-f_D$     $f_C+f_D$     f

Fig. 7

EP 4 148 455 A1

Europäisches
Patentamt
European
Patent Office
Office européen
des brevets

# EUROPÄISCHER RECHERCHENBERICHT

Nummer der Anmeldung

EP 22 19 2769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | US 2022/107389 A1 (BIRKENHAUER CHRISTOPH [DE] ET AL) 7. April 2022 (2022-04-07) | 1-6,8,9 | INV.<br>G01S7/40 |
| Y,P | * Absätze [0010], [0024] - [0027], [0032], [0036], [0038], [0047], [0052]; Abbildung 1 *<br>----- | 4-6 | ADD.<br>G01S13/931 |
| X | DE 10 2019 102077 A1 (FRAUNHOFER GES FORSCHUNG [DE]) 30. Juli 2020 (2020-07-30) | 1-9 | |
| Y | * Absätze [0001], [0063], [0064], [0069], [0070] - [0072], [0088]; Abbildungen 1, 4 *<br>----- | 3-6 | |
| X | US 5 892 479 A (MILLS KLYTE G [KR] ET AL) 6. April 1999 (1999-04-06) | 1-9 | |
| Y | * Spalte 3, Zeilen 9-17; Abbildung 2 *<br>* Spalte 4, Zeilen 4-61; Abbildung 1 *<br>----- | 3-6 | |
| Y | US 5 117 231 A (YARON JOHN D [US]) 26. Mai 1992 (1992-05-26)<br>* Spalte 6, Zeilen 9-49; Abbildung 10 *<br>----- | 3-6 | |
| Y | US 2008/018525 A1 (SVY KOSAL [US] ET AL) 24. Januar 2008 (2008-01-24) | 3-6 | RECHERCHIERTE SACHGEBIETE (IPC) |
| | * Absätze [0072] - [0075], [0092], [0105] - [0107], [0119], [0121], [0124], [0125], [0130]; Abbildungen 19-23 *<br>----- | | G01S |
| A,D | WO 2020/165191 A1 (DSPACE GMBH [DE]) 20. August 2020 (2020-08-20)<br>* das ganze Dokument *<br>----- | 1-9 | |

Der vorliegende Recherchenbericht wurde für alle Patentansprüche erstellt

| Recherchenort | Abschlußdatum der Recherche | Prüfer |
|---|---|---|
| München | 24. Januar 2023 | Schmelz, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

17

**ANHANG ZUM EUROPÄISCHEN RECHERCHENBERICHT
ÜBER DIE EUROPÄISCHE PATENTANMELDUNG NR.**

EP 22 19 2769

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2023

| Im Recherchenbericht angeführtes Patentdokument | Datum der Veröffentlichung | Mitglied(er) der Patentfamilie | Datum der Veröffentlichung |
|---|---|---|---|
| US 2022107389 A1 | 07-04-2022 | EP 3982148 A1<br>US 2022107389 A1 | 13-04-2022<br>07-04-2022 |
| DE 102019102077 A1 | 30-07-2020 | DE 102019102077 A1<br>WO 2020157039 A2 | 30-07-2020<br>06-08-2020 |
| US 5892479 A | 06-04-1999 | KEINE | |
| US 5117231 A | 26-05-1992 | EP 0425091 A2<br>US 5117231 A | 02-05-1991<br>26-05-1992 |
| US 2008018525 A1 | 24-01-2008 | GB 2423880 A<br>US 2008018525 A1 | 06-09-2006<br>24-01-2008 |
| WO 2020165191 A1 | 20-08-2020 | CN 113544531 A<br>EP 3924750 A1<br>JP 2022521159 A<br>US 2022099797 A1<br>WO 2020165191 A1 | 22-10-2021<br>22-12-2021<br>06-04-2022<br>31-03-2022<br>20-08-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020165191 A1